# EUROPEAN PATENT SPECIFICATION

(11) **EP 2 323 868 B1**
(45) Date of publication and mention of the grant of the patent: **17.10.2012**
(21) Application number: 09810304.7
(22) Date of filing: 21.08.2009
(51) Int. Cl.: B60R 9/045

(54) **DISPOSABLE CARRIER FOR VEHICLE ROOFS**
ABNEHMBARER TRÄGER FÜR FAHRZEUGDÄCHER
SUPPORT JETABLE POUR TOITS DE VÉHICULE

(30) Priority: 27.08.2008 SE 0801840
(43) Date of publication of application: 25.05.2011
(73) Proprietor: Ridgeview Transportation KB, 756 43 Uppsala (SE)
(72) Inventor: ANDERSSON, Karl, S-756 43 Uppsala (SE); ALVÉN, Anders, S-753 22 Uppsala (SE)
(74) Representative: Lindgren, Anders
(86) International application number: PCT/SE2009/050944
(87) International publication number: WO 2010/024754

(56) References cited:
- EP-A1- 1 329 361
- EP-A1- 1 329 361
- WO-A1-85/04844
- WO-A1-2004/037611
- WO-A1-2004/037611
- US-A- 3 606 230
- US-A- 3 884 404
- US-A- 3 946 917
- US-A- 3 946 917
- US-A- 4 226 354
- US-A- 4 226 354

## Description

THIS INVENTION relates to a carrier for supporting a load on the roof of a vehicle. In particular, the invention is directed to a disposable load carrier made of a single piece of an environmentally friendly material.

### DESCRIPTION OF CLOSEST PRIOR ART

Load carriers, often denoted "roof racks", can be mounted on the roof of a vehicle to hold a load which may not fit within the vehicle. Typically, such roof racks consist of spaced metal bars spanning across the vehicle roof, attached to the vehicle by feet fixed to the rain gutters or similar structures on either side of the vehicle roof. Since modern vehicles seldom have rain gutters, roof racks nowadays have to be specifically designed for each type of vehicle.

One common problem with conventional roof racks is that they may be stored outside the vehicle. This means that the racks are not always available when needed. Another common problem is that conventional roof racks only support the load at typically two positions (the two metal bars spanning across the vehicle). This is acceptable for rigid loads (such as planks, to mention one example) but not for flexible loads, wherein the load may deform and destroy the roof-top paint during transport. Furthermore, metal roof racks are relatively expensive, and do not lend themselves to economical disposal after they are used.

It is therefore an object of the invention to provide a disposable roof rack which is inexpensive to produce and which provides stability for mounting large objects thereon.

Another object of the invention is the provision of an inexpensive roof rack which includes integrated, general fastening means for securing the rack to a range of different vehicle makes.

The problem with metal roof racks has been addressed by others. In US5947354 an inflatable roof rack is disclosed. The rack comprises two inflatable members which replaces the metal bars in conventional roof racks. The members are held in position by means of straps spanned inside the vehicle, thereby eliminating the need for vehicle-specific mounting devices.

In US4402442 a roof rack made specifically for carrying a surf board is disclosed. This roof rack is made of flexible material and is anchored to the vehicle using the rain gutters.

In US4226354 , a portable and inexpensive roof rack made for carrying large items is disclosed. This roof rack comprises a laminated support member, wherein an inner layer of reinforcing material is embedded in a protecting, soft outer layer of foam. A further objective of this roof rack is a low production cost which allows the rack to be of disposable nature.

In EP 1 329 361 A1 there is disclosed a load support device for use on the roof of a motor vehicle. It comprises a sheet of flexible material to which are secured two support members on which a load may be placed. The straps are secured to the sheet to enable the device to be secured to a motor vehicle, e.g. utilising hinge mountings of the vehicle. Preferably, the straps are such that they may be doubled back and secured to form a continuous loop. Each strap has an auxiliary loop for use as a load lashing point. The device is intended for occasional use and when not required may be rolled into a compact configuration and stored in the boot of the vehicle.

The prior art described above are in essence a copy of the traditional metal roof rack. The disclosed racks all comprise two members, each placed essentially as if they were made of metal.

### BRIEF DESCRIPTION OF THE INVENTION

The objective of the current invention is to simplify the transportation of one or more large objects on a vehicle by use of a disposable support making safe and convenient anchoring of the objects onto the vehicle roof possible.

In a preferred embodiment of this invention, a single elongatable support pad is disclosed. The support pad comprises at least one elevated or protruding ridge and at least one elongatable region. The ridge is placed across the vehicle and the sheet can be elongated along the vehicle.

In another embodiment of this invention, a single elongatable support pad comprising two ridges is disclosed. The two elevated ridges on the support pad comprises are held together by an elongatable region. The ridges are placed across the vehicle and the sheet can be elongated along the vehicle.

In another embodiment of the invention, said elongatable support pad has integrated straps for securing the support and the load onto the vehicle. The integration of the straps makes the use of the support pad simpler and safer.

In order that the invention may be more readily understood and put into practical effect, reference will now be made to the accompanying drawings which illustrate a preferred embodiment of the invention. Other advantages of the invention will be apparent from the following description.

### DESCRIPTION OF THE DRAWINGS

The features of the present invention, which are believed to be novel, are set forth with particularity in the appended claims. The invention may best be understood by reference to the following description in connection with the accompanying drawings, in which:
FIG 1 describes the support pad;
FIG 2 shows a support pad partly elongated;
FIG 3 shows a support pad placed on a roof of a vehicle;
FIG 4 shows one possible elongation function of the support pad; and
FIG 5 shows another possible elongation function of the support pad.

### DETAILED DESCRIPTION OF THE INVENTION

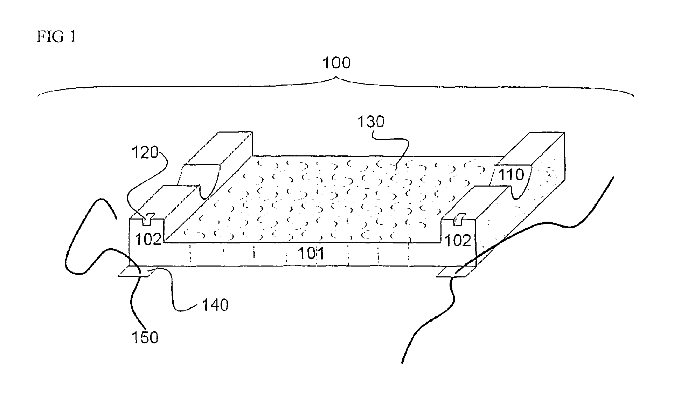

Referring to FIG. 1, a support pad 100 comprises a single unit with a sheet 10 and two ridges 102. Each ridge has preformed grooves or slits 110 designed to keep the loaded object steady in place. Furthermore, each ridge has slits 120 for safe and convenient positioning of the straps 150. The straps 150 are loosely attached to the support pad near the ridges 140 in order to be readily available when the loaded object shall be secured. In order to fit on most vehicles, the support pad is perforated 130 in a way that allows longitudinal elongation of the pad. When the support pad 100 is placed onto a vehicle roof, the ridges 102 are extending essentially orthogonally to the longitudinal axis of the vehicle.

The support pad is made of an elastically deformable substance. It is preferably a light, slightly flexible material. Foam is a preferred material, in particular expanded polystyrene, laminated polyethylene foam or foamed polyurethane is preferred materials for the support pad. It is however possible to make the support pad in other materials, such as compressed paper.

The straps are typically thin elongated securing members, designed to anchor the support pad and the load onto the vehicle roof. Suitable straps include, but are not limited to, rope, strap, metal bands, strings, wire and other elongated members suitable for anchoring of objects and support pad onto a vehicle roof. Particularly suitable straps include single use straps made of polypropylen, polyethylene or polyester intended for professional shipping. Such straps are available from many vendors, including Swestrap AB (Linköping, Sweden).

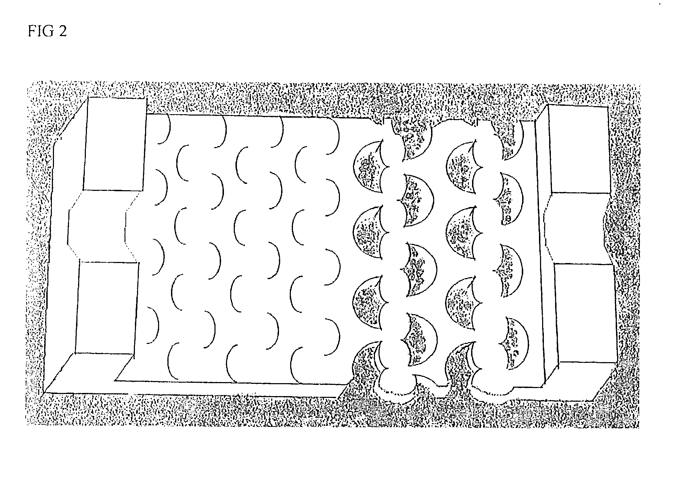

An example of the elongatable region of the support pad is most clearly shown in FIG 2. It is possible to obtain a stable and adjustable elongation of the support pad by cutting a series of half-circles in the pattern shown in FIG 2. When perforating the support pad sheet in such a manner, the length of the support pad sheet can be adjusted.

To install a disposable carrier, it is laid onto the vehicle roof at the desired position with the ridges lying across the vehicle and the adjacent doors opened. After having put the object on the support pad, the ends of the straps are pulled into the vehicle from opposite sides, and the ends are joined or fastened together and pulled tight. When the doors are closed the straps are pulled inwards to follow the contour of the door at that position thereby firmly holding the carrier to the vehicle body. Final securing may involve further tensioning of the straps within the vehicle cabin.

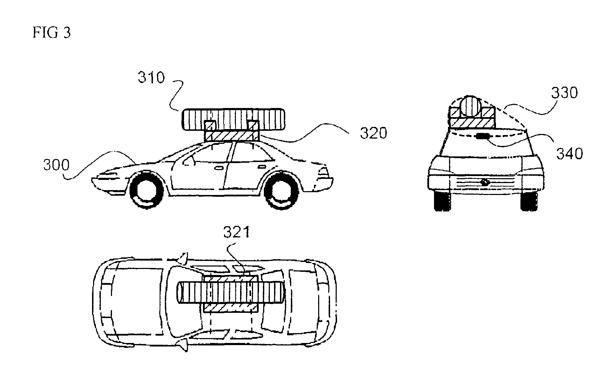

The support pad and a loaded object mounted onto a vehicle roof are shown in Figure 3. On the roof of a vehicle 300 the object 310 is placed onto the support pad 320. The pad may be elongated as indicated at 321. Two straps 330 are wrapped around the object, through the door openings, and are connected by use of a snap-fit buckle 340 or similar device.

Although the connection of the straps 330 is preferably within the vehicle 300 and in the middle of the vehicle, the straps may be of uneven length so that the connection is off centre, or even outside the vehicle. The joined straps will however always pass through the interior of the vehicle. For example, a long strap may extend from one corner of the support pad, under the roof, and be connected to a connector at the diagonally opposite corner of the support pad.

The invented support pad is designed with two objectives in mind. Firstly, the loaded object must be fixated to the vehicle roof in a secure manner. Secondly, the actual loading of the object must to be convenient and performed in a way that minimizes scratches or other damage to the vehicle and the loaded object.

The loaded object is held in place by the two ridges, preferably by use of the preformed grooves. The object and the pad are then tied to the vehicle by use of two straps which are placed in guiding slits on the ridges. The straps are connected and tightened inside the vehicle by use of a buckle or similar device. This arrangement guarantees that the object is held in position during travel and accidents.

When loading the object, the use of a single support pad means that only one piece must be held in position when the object is put onto the roof. The risk that the support pad tilts due to, for example, blowing wind is small. In strong wind, it is possible to use the loosely attached straps for holding the support pad by placing one end of each strap inside the vehicle and closing the doors. The separation of the ridges on the pad can be adjusted beforehand, so that the support pad size matches the object throughout the loading procedure. Once the object is in place, both straps are readily available near the object due to the loose attachment of said straps near each ridge. The operator can therefore easily and quickly secure the object onto the roof.

One advantage of the support pad is that it is so inexpensive to produce that it may be discarded if used just once. Unlike more costly roof racks, it is not necessary for an individual owning the racks to store them when not in use to justify their expense. Because of the low expense in production of the support pad, it is believed that retail stores, such as lumber yards, appliance stores, furniture stores, or the like could easily maintain a supply of the disposable carrier for use by purchasers of their products when the products are to be transported on top of the purchaser's vehicle. After the purchaser has transported the object to a desired location, the carrier could then be discarded without any substantial financial loss.

The above described load carrier has several advantages over known carriers, including
- The support pad is made of one piece, making it easier for the operator to keep the single support pad in position when loading the object as compared to known carriers comprising two or more pieces,
- The support pad has a sheet of foam between the ridges which provides additional protection of the roof paint,
- When loading heavy object, not only the ridges but also the sheet will support the load, thereby increasing the surface of the roof put under pressure,
- the support pad is lightweight and of economic construction making disposable use realistic, and
- the support pad can be mounted and removed quickly and easily, without any damage to the vehicle roof.

### EXAMPLE

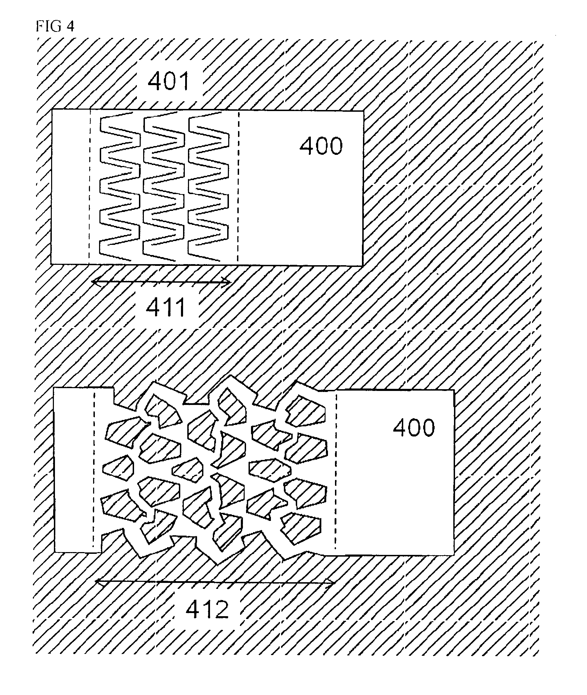

The following example is presented in order to explain the elongation function of the support pad. Referring now to figure 4, in which the elongatable part of a support pad is shown as a sketch of a sheet of deformable plastic foam 400. The pattern cut in the sheet of deformable plastic foam comprises interleaved brackets 401. In a practical example, a sheet of deformable polyethylene foam was manufactured according to the sketch and a ruler was placed on top of the sheet of foam. The distance 411 between the two dashed black lines indicated by the arrow was determined to approximately 21 cm. The sheet of deformable plastic foam was then elongated by pulling the sheet apart by hand. The distance 412 between the dashed black lines was determined to approximately 40 cm.

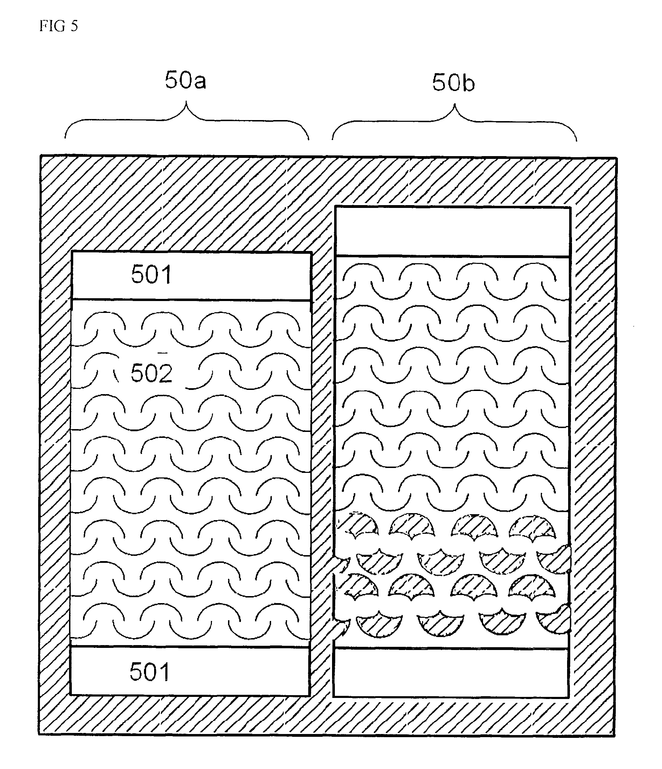

A different geometry for the cutting pattern of the elongatable part of the support pad was tested, as shown in figure 5. In a sketch of a sheet of deformable plastic foam 50a the two ridges 501 are indicated as well as the cutting pattern 502 of interleaved half circles. In a practical example, a sheet of deformable plastic foam was cut according to the sketch 50a and the elongatable function of the cut pattern is shown in 50b by the partly elongated area of the sheet. The cut pattern shown in figure 5 allowed for an elongation of approximately 50% as determined in a practical test performed essentially as previously described.

The foregoing describes only some embodiments of the invention, and modifications which are obvious to those skilled in the art may be made thereto without departing from the scope of the invention as defined in the following claims.

## Claims

1. A portable disposable load carrier comprising a support pad (100) to be mounted on the roof of a vehicle, and at least one ridge (102) protruding upwards from the support pad, where said support pad has a longitudinal axis arranged to be aligned essentially in parallel with the longitudinal axis of a vehicle, and said at least one ridge (102) extending essentially orthogonally to the longitudinal axis, **characterised in that** said support pad (100) has at least one region which can be longitudinally elongated.

2. A portable disposable load carrier according to claim 1, **characterised in that** said longitudinally elongateable region is perforated (130).

3. A portable disposable load carrier according to claim 1 or 2, **characterised in that** the support pad (100) is made of an elastically deformable substance.

4. A portable disposable load carrier according to any one of the previous claims, **characterised in that** the load carrier is made of an elastically deformable substance.

5. A portable disposable load carrier according to any one of the previous claims, **characterised in that** is comprises at least two protruding ridges (102) and where the longitudinally elongateable region extends between said at least two protruding ridges (102).

6. A portable disposable load carrier according to any one of the previous claims, **characterised in that** said load carrier comprising at least one strap (150) attached to it.

## Patentansprüche

1. Tragbarer abnehmbarer Lastträger mit einem Abstützauflager (100), das auf dem Dach eines Fahrzeugs angebracht werden kann, und mit wenigstens einem Grat (102), der sich von dem Abstützauflager nach oben erstreckt, wobei das Abstützauflager eine Längsachse aufweist, die so angeordnet ist, dass sie im Wesentlichen parallel zu der Längsachse eines Fahrzeugs angeordnet werden kann, und wobei sich der wenigstens eine Grat (102) im Wesentlichen senkrecht zur Längsachse erstreckt, **dadurch gekennzeichnet, dass** das Abstützauflager (100) wenigstens einen Bereich aufweist, der in der Längsrichtung verlängert werden kann.

2. Tragbarer abnehmbarer Lastträger nach Anspruch 1, **dadurch gekennzeichnet, dass** der in der Längsrichtung verlängerbare Bereich perforiert (130) ist.

3. Tragbarer abnehmbarer Lastträger nach Anspruch 1 oder 2, **dadurch gekennzeichnet, dass** das Abstützauflager (100) aus einer elastisch deformierbaren Substanz hergestellt ist.

4. Tragbarer abnehmbarer Lastträger nach einem der vorhergehenden Ansprüche, **dadurch gekennzeichnet, dass** der Lastträger aus einer elastisch deformierbaren Substanz hergestellt ist.

5. Tragbarer abnehmbarer Lastträger nach einem der vorhergehenden Ansprüche, **dadurch gekennzeichnet, dass** dieser wenigstens zwei vorstehende Grate (102) aufweist und bei dem sich der in der Längsrichtung verlängerbare Bereich zwischen den wenigstens zwei vorstehenden Graten (102) erstreckt.

6. Tragbarer abnehmbarer Lastträger nach einem der vorhergehenden Ansprüche, **dadurch gekennzeichnet, dass** der Lastträger wenigstens einen Riemen (150) daran vorgesehen aufweist.

## Revendications

1. Porteur de charge jetable portable, comprenant un tampon de support (100) destiné à être monté sur le toit d'un véhicule, et au moins une arête (102) faisant saillie vers le haut à partir du tampon de support, ledit tampon de support comportant un axe longitudinal agencé de façon à être aligné essentiellement en parallèle avec l'axe longitudinal d'un véhicule, et ladite au moins une arête (102) s'étendant essentiellement de façon orthogonale par rapport à l'axe longitudinal, **caractérisé en ce que** ledit tampon de support (10) comporte au moins une région qui peut être longitudinalement allongée.

2. Porteur de charge jetable portable selon la revendication 1, **caractérisé en ce que** ladite région pouvant être longitudinalement allongée est perforée (130).

3. Porteur de charge jetable portable selon la revendication 1 ou 2, **caractérisé en ce que** le tampon de support (100) est réalisé en une substance élastiquement déformable.

4. Porteur de charge jetable portable selon l'une quelconque des revendications précédentes, **caractérisé en ce que** le porteur de charge est réalisé en une substance élastiquement déformable.

5. Porteur de charge jetable portable selon l'une quelconque des revendications précédentes, **caractérisé en ce qu'**il comprend au moins deux arêtes saillantes (102), et dans lequel la région pouvant être longitudinalement allongée s'étend entre lesdites au moins deux arêtes saillantes (102).

6. Porteur de charge jetable portable selon l'une quelconque des revendications précédentes, **caractérisé en ce que** ledit porteur de charge comprend au moins une sangle (150) attachée à celui-ci.
